# EUROPEAN PATENT APPLICATION

(11) **EP 2 511 546 A1**
(43) Date of publication of application: **17.10.2012**
(21) Application number: 12163987.6
(22) Date of filing: 12.04.2012
(51) Int. Cl.: F16C 27/06, F16C 35/04

(54) **Additional cover and felted intermediate bearing embodiment having a vulcanised wedge used for cardan shaft applications**

(30) Priority: 14.04.2011 TR 201103657
(71) Applicant: Tirsan Kardan Sanayi Ve Ticaret Anonim Sirketi, 45030 Manisa (TR)
(72) Inventor: Isik, Efe, 45030 Manisa (TR); Tasan, Korkut, 45030 Manisa (TR); Ozgurler, Huseyin, 45030 Manisa (TR)
(74) Representative: Iskender, Ibrahim

(57) **Abstract**

The invention relates to an intermediate bearing embodiment comprising at least one roller bearing (20) used for guiding of shafts functioning for moment and power transmission on a plurality of machinery, and at least one suspended intermediate bearing block (10) wherein the said roller bearing (20) is located, at least one rubber connecting piece (70) positioned into the said suspended intermediate bearing block (10) and a supporting sheet metal (30) inserted between the said roller bearing (20) and the connecting piece (70) in order to prevent extension of damages to the said connecting piece (70) and in continuation to the suspended intermediate bearing block (10) in roller bearing (20) damages.

## Description

### The Related Art

The invention relates to a roller bearing and suspended intermediate bearing embodiment wherein the roller bearing is located, used for guiding of shafts functioning for moment and power transmission on a plurality of machinery.

The said invention relates to embodiment of heavy serial bearings used for guiding of cardan shafts working at the shaft of wheeled heavy vehicles, providing safer, long service life and requiring less maintenance, with enhanced shock absorbing feature.

### The Prior art

Today, bearing embodiments that are used commonly have a great weight due to the materials they are made from. Therefore, since a heavy bearing will put an excessive load on the shaft and the block, the block and the shaft remain under significant static and dynamic loads. Heavy bearings shortening the lives of shafts and blocks is a major problem in terms of the prior art.

The bearings used for the prior art can not protect the roller bearings and balls under the said heavy loads. Life of roller bearings is shortened for they are abraded rapidly and in a short time. And that creates additional maintenance and repair cost to the user.

Since shock absorbing characteristics of the bearings used for prior art is low, the roller bearing and bearing embodiments used on motorised vehicles running in strenuous field situations soon become damaged and rendered inoperative.

Heavy serial bearings used for the prior art have been designed in accordance with only a single type of vehicle's bracket.

Assembly of the bearings used for the prior art is rather difficult as of their bearing and roller bearing embodiments.

### Description of the Invention

The invention puts less load onto the shaft and the block since it has a 15% lighter intermediate bearing block design compared to earlier ones. Therefore, it assists elongation of the life of the shaft and the block a bit more.

The invention brings operating environment of the roller bearing to optimum level by protecting the ball bearing. Thanks to this feature, safety of the motorised vehicle in cruising wherein the roller bearing is guided to the invention is enhanced significantly.

The invention makes utilisation of roller bearing oil possible, which operates in oil, with maximum efficiency for a long time thanks to the sealing design it owns.

The bearing design preventing abrasion of roller bearing, which the invention owns, is another major feature elongating the life of roller bearing.

The invention has a maximum level protection capability the roller bearing against shocks coming from outside, high frequency vibrations thanks to its improved rubber form and absorption characteristic.

Since the invention comprises suspension rubber vulcanised (process of hardening rubber with sulphur or the state wherein any type of elastomer and thermoplastic that went into reaction with sulphur), its connection to the block and the shaft is easier. Besides, it can be easily mounted.

The invention can also comply with different block brackets thanks to its design.

The invention has the nut - lock feature minimising the risk of becoming unlocked which is a significant problem in the prior art.

To meet the objectives cited above, the invention is an intermediate bearing embodiment comprising a shaft system (50) of the slip shaft operating in oily environment within at least one roller bearing, preventing unwanted substances such as dust, dirt that may come from outer environment from entering into the operating environment and at least one suspended intermediate bearing block for guiding the said roller bearing and is characterised in that; it comprises, at least one connecting piece (70) positioned into a suspended intermediate bearing block (10) and supporting sheet metal (30) inserted between the said roller bearing and the connecting piece in order to prevent extension of damages to the connecting piece (70) and in continuation to the suspended intermediate bearing block (10) in roller bearing (20) damages.

To meet all the objectives cited above and as will be understood from the detailed description below, the present invention brings along many conveniences as of its said features.

The structural and characteristic features of the invention and all the advantages will be understood better in detailed descriptions with the figures given below and with reference to the figures, and therefore, the assessment should be made taking into account the said figures and detailed explanations.

### Brief Description of Drawings

Figure-1 is a perspective view with roller bearing guided into the invention.
Figure-2 is a cross-sectional view from the left illustrating the supporting sheet metal and the lock plate for roller bearing, in a position wherein roller bearing is not guided into the invention.
Figure-3 is a cross-sectional view from the left illustrating two piece s of V felt guard, in a position wherein roller bearing is guided into the invention with additional cover.
Figure-4 is a cross-sectional view from the left illustrating the bearing embodiment, which is the subject of the invention, in the state of operation.

### Reference Numbers

- 10-: Suspended Intermediate Bearing Block
- 11-: Suspension Mounting Slot
- 20-: Roller Bearing
- 21-: Lock Plate for Roller Bearing
- 30-: Supporting Sheet Metal
- 40-: Additional Cover
- 50-: Shaft System
- 60-: Felt (V Felt)
- 70-: Rubber Connecting Piece

### Detailed Description of the Invention

The invention will be understood better when described by making references to the drawings and the reference numbers given above.

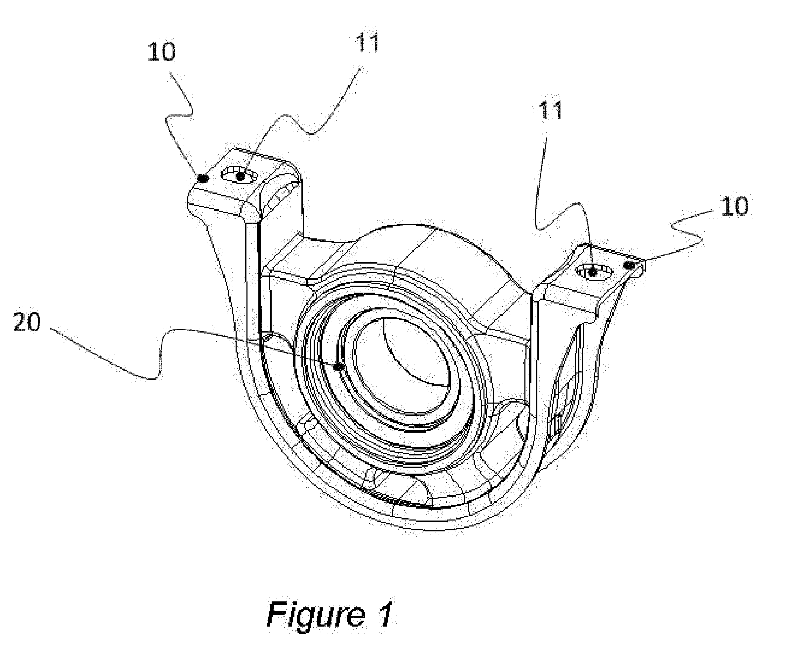

Figure 1 is a two-dimensional drawing illustrating the roller bearing (20) generally used for guiding of shafts and the suspended intermediate bearing block (10) wherein the roller bearing (20) is located. The invention on the other hand relates to novelties made to the said suspended intermediate bearing block (10).

Thanks to suspension mounting slots (11) seen in Figure 1, the suspended intermediate bearing block (10) has the capability of utilisation also on different type of vehicles having different shaft bearing distances.

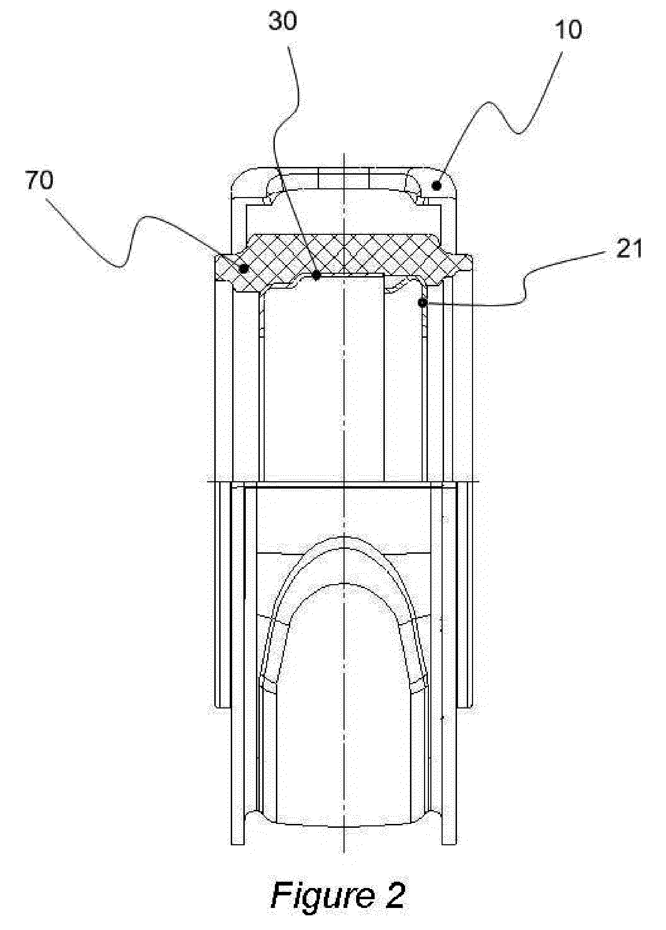

Figure 2 is a cut-out view from the left illustrating the supporting sheet metal (30) located inside the suspended intermediate bearing block (10), connected to the block of rubber connecting piece (70) in vulcanised state and in order to prevent extension of damages to the connecting piece (70) and in continuation to the suspended intermediate bearing block (10) in roller bearing (20) damages.

Thanks to the suspended intermediate bearing embodiment (10) being the subject of the invention, the roller bearing (20) is seated into the supporting sheet metal (30) which is in a state vulcanised to the rubber bearing (70) and is mentioned above. Hence, the roller bearing (20) will not give harm to the rubber connecting piece (70) in case it moves during operation. At the same time, the rubber connecting piece (70) is also prevented from breaking to piece s in case the damaged or faulty working roller bearing (20) is overheated.

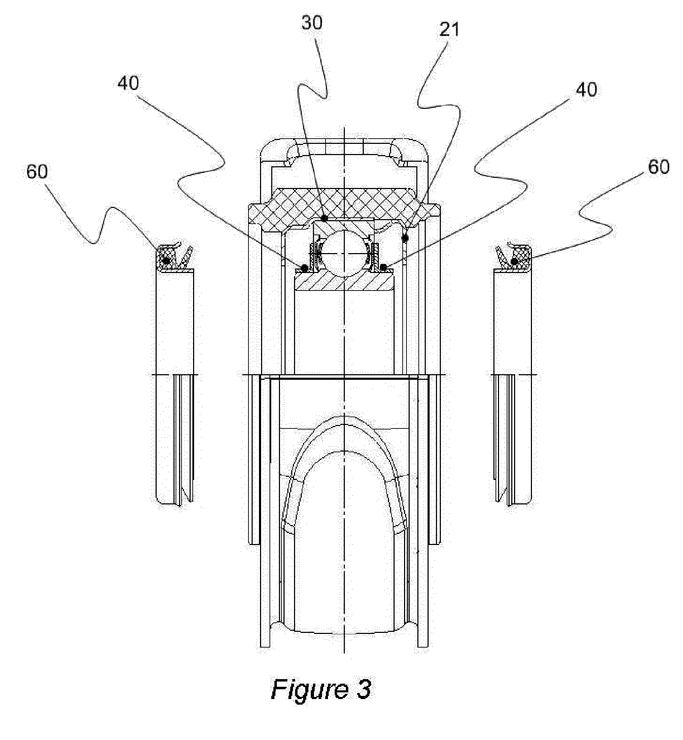

Figure 3 is a drawing illustrating the at least two V felt (60) elements, creating a more efficient working environment by preventing unwanted substances such as dust, dirt from entering into the operating environment of the roller bearing (20) in addition to increasing sealing, in a state unconnected to the suspended intermediate bearing block (10).

Figure 3 is, at the same time, a cut-out figure taken from the left illustrating novelty of additional cover (40) of the suspended intermediate bearing embodiment (10) being the subject of the invention, protecting the roller bearing (20) from external effects by guarding it better and providing the roller bearing (20) with a more favourable (optimum) operating environment.

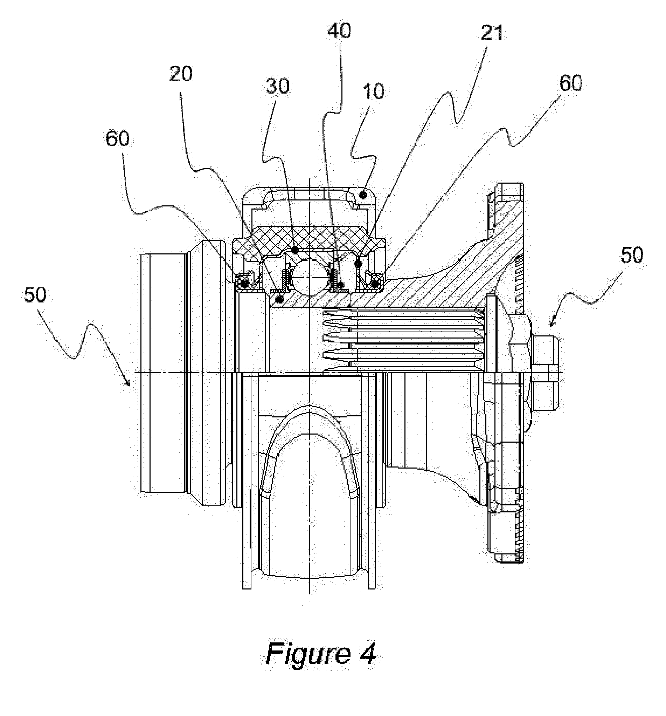

Figure 4 is a cut-out figure taken from the left illustrating the product, which is the subject of the invention, wherein comprising new elements such as additional cover (40), supporting sheet metal (30), V felt (60) and shaft system (50), in operative state in the system.

The said shaft system (50) of the slip shaft operating in oily environment within the roller bearing (20), preventing unwanted substances such as dust, dirt that may come from outer environment from entering into the operating environment.

The scope of protection of this application is determined in the Claims section and may never be limited to what is described above for the purposes of exampling. It is clear that any person who is specialized in the method may bring forth the innovation that has been brought forward with the invention also by using the similar embodiments and/or may apply this embodiment to the other areas of similar purposes that is used in the technique involved. Therefore, it is also apparent that such embodiments will be lacking novelty and especially the criteria of exceeding the state of art.

## Claims

1. The invention is an intermediate bearing embodiment comprising a shaft system (50), of the slip shaft operating in oily environment within at least one roller bearing (20), preventing unwanted substances such as dust, dirt that may come from outer environment from entering into the operating environment and at least one suspended intermediate bearing block (10) for guiding the said roller bearing (20), and it is **characterised in that**; it comprises at least one connecting piece (70) positioned into a suspended intermediate bearing block (10) and supporting sheet metal (30) inserted between the said roller bearing (20) and the connecting piece (70) in order to prevent extension of damages to the said connecting piece (70) and in continuation to the suspended intermediate bearing block (10) in roller bearing (20) damages.

2. An intermediate bearing embodiment according to Claim 1; and it is **characterised in that**; it comprises additional cover (40) protecting the said roller bearing (20) from external effects by guarding it and providing the roller bearing (20) with a more favourable (optimum) operating environment.

3. An intermediate bearing embodiment according to Claim 1; and it is **characterised in that**; it comprises at least one felt (60) placed onto the said supporting sheet metal (30) in order to provide sealing.

4. An intermediate bearing embodiment according to Claim 3; and it is **characterised in that**; the said felt (60) is V type of felt.

5. An intermediate bearing embodiment according to Claim 1; and it is **characterised in that**; the said suspended intermediate bearing block (10) comprises at least one suspension mounting slot (11) so it may be used on different type of vehicles having different shaft bearing distances.

6. An intermediate bearing embodiment according to Claim 1; and it is **characterised in that**; the said connecting piece (70) is vulcanised rubber.
